# EUROPEAN PATENT SPECIFICATION

(11) **EP 2 552 075 B1**
(45) Date of publication and mention of the grant of the patent: **23.07.2014**
(21) Application number: 12170200.5
(22) Date of filing: 31.05.2012
(51) Int. Cl.: H04L 29/06, H04L 29/08

(54) **Systems and methods of distributed file storage**
Systeme und Verfahren von verteilter Dateispeicherung
Systèmes et méthodes pour stockage distribué de données

(30) Priority: 26.07.2011 US 201113191321
(43) Date of publication of application: 30.01.2013
(73) Proprietor: Red 5 Studios, Inc., Laguna Hills, CA 92653 (US)
(72) Inventor: Kern, Mark, Laguna Hills, CA California 92653 (US); Olick, Jon, Laguna Hills, CA California 92653 (US); Nikdel, Dave, Laguna Hills, CA California 92653 (US)
(74) Representative: Käck, Stefan

(56) References cited:
- US-A1- 2011 161 666
- US-B1- 6 374 336
- US-B1- 7 970 820

## Description

### FIELD OF THE INVENTION

The present technology relates generally to distributed computing, and more specifically, but not by way of limitation, to systems and methods for managing the distribution of files across a plurality of client devices.

### BACKGROUND

The storage and publishing of image files across computer networks are ubiquitous functionalities. For example, web-based file storage systems allow end users to upload, store, manage, and even edit image files remotely. These web-based storage systems also provide end users with the ability to publish and share image files with others. To be sure, entire web-based services have been created solely around the concept of providing end users with web-based image repositories where end users may share image files with others.

While the storage of image files is common feature of many web-based file services, the storage resources necessary to support these functionalities are quite costly, as image files are often large in size. As such, many of these web-based services employ various compression techniques that attempt to shrink the size of image files that are uploaded by end users. Unfortunately, the more an image file is compressed to reduce its size, the tendency for loss of image quality increases. Additionally, even compressed image files may also be relatively large (depending on the original size of the image file and the compression technique employed).

An example for content distribution in a network is described in US 7,970,820 B1. In this document, a content provider generates a network topology having one or more subnetworks made up of content sources. The content provider divides content, such as applications, into segments for distribution. The content provider then distributes the content such that for each identified subnetwork, each content segment is distributed to a content source. Subsequent, client computing device requests for content can be serviced by selecting a content source in a particular subnetwork selected for delivering the requested content to the client computing device to minimize traffic flow of the requested content through the nodes of the distribution network.

US 2011/0161666 A1 discloses digital content retrieval utilizing dispersed storage. The method begins by a processing module obtaining a unique retrieval matrix based on an identity of the playback device and sending a request for retrieval of a set of encoded broadcast data slices to a dispersed storage network (DSN) memory. The request includes the unique retrieval matrix and identity of the set of encoded broadcast data slices. The method continues with the processing module receiving a subset of the set of encoded broadcast data slices from the DSN memory, wherein the subset of the set of encoded broadcast data slices is based on the unique retrieval matrix. The method continues with the processing module storing the subset of the sets of encoded broadcast data slices.

### SUMMARY OF THE INVENTION

The invention is defined in independent claims 1, 9 and 13, respectively. Particular embodiments are set out in the dependent claims.

Systems and methods of the present technology are directed to the distributed storage across a plurality of client devices and utilization of the distributed files. More particularly, the systems and methods of the present technology are directed to dividing a file into sections and distributing the sections across a plurality of client devices via a web server. It will be understood that not all of the client devices may receive the same sections. Additionally, all of the sections of a particular file may not be distributed to a single client device. On the other hand, because client devices may not always be communicatively coupled to the web server, critical sections of the file may be distributed to several of the plurality of client devices for redundancy. Therefore, the web server may ensure that a threshold amount of critical sections are available for use at all times. Additionally, because the systems and methods may be utilized to distribute sections of a plurality of files, each client device may receive sections of many different files.

The systems and methods provided herein include redundant features. For example, if the web server determines that a threshold amount of critical sections of a file are not currently available to the web server, the web server may be configured to redistribute the sections of the file to additional client devices that are currently making resources available to the web server. It will be understood that with regard to distributed file storage, the resources that are made available to the web server typically include local storage within the client device, although other types of resources may also be distributed, such as CPU, storage, network bandwidth, and so forth.

Further, each of the client devices may include a resource allocation application that provides allocated resource data to a web server. End users of client devices may utilize the resource allocation application to specify the amount of resources that are to be distributed to the web server. Based upon the available allocated resource data received from the application, the web server may utilize the allocated resource data to determine sections of the file that are to be provided to the client device. For example, large sections may not be distributed to client devices with insufficient available resources.

According to a first aspect, the present invention is directed to methods for managing the distribution of files across a plurality of client devices, the methods including: (a) dividing a file into sections via a web server; (b) distributing one or more of the sections to each of a first subset of the plurality of client devices so that all sections of the file are distributed across the first subset of the plurality of client devices, each of the first subset of the plurality of client devices having storage space that is allocated to the web server; and (c) upon determining that an actual amount of sections that are currently available to the web server are below a threshold amount, redistributing the sections of the file to a second subset of the plurality of client devices determined to have storage space that is allocated to the web server.

According to a second aspect, the present invention is directed to web servers for managing the distribution of files across a plurality of client devices that include: (a) a memory for storing executable instructions for managing the distribution of files across a plurality of client devices; and (b) a processor configured to execute the instructions stored in the memory, the instructions including: (i) a file separator module configured to divide a file into sections; (ii) a file allocation module configured to distribute one or more of the sections to each of a first subset of the plurality of client devices so that all sections of the file are distributed across the first subset of the plurality of client devices, each of the first subset of the plurality of client devices having storage space that is allocated to the web server; and (iii) upon determining that an actual amount of sections that are currently available to the web server are below a threshold amount, the file allocation module being further configured to redistribute the sections of the file to a second subset of the plurality of client devices determined to have storage space that is allocated to the web server.

The file allocation module may also be configured to reallocate the sections of the file to a third subset of the plurality of client devices determined to have storage space that is allocated to the web server, upon determining that the actual amount of sections that are currently available to the web server are below a threshold amount.

Further, the file separator module may be configured to: transform code the file to produce a plurality of coefficients by way of a wavelet transform algorithm; aggregate the coefficients into a plurality of sections; and distribute the plurality of sections across the first subset of the plurality of client devices.

The file separator module may also be configured to divide the wavelet transform algorithm into segments and the file allocator module may be configured to distribute the segments across the first subset of the plurality of client devices. The web server may comprises a file assembly module that is configured to reassemble the wavelet transformed file by: assembling the algorithm by obtaining the segments distributed to one or more client devices; obtaining the sections distributed across the first subset of the plurality of client devices; reassembling the coefficients from the obtained sections, according to the wavelet transform algorithm; and quantizing and encoding the coefficients to produce the wavelet transformed file.

In addition, the web server may comprise an analysis module that is configured to: determine if the threshold amount of sections are available; and redistribute the sections to the second subset of the plurality of client devices if the threshold amount of sections are not available. The analysis module may be further configured to determine if a threshold amount of critical sections are available to the web server, and upon determining that an actual amount of critical sections that are currently available to the web server are below a threshold amount, the file allocation module redistributing the sections of the file to a second subset of the plurality of client devices determined to have storage space that is allocated to the web server.

The second subset may include at least a portion of the first subset.

According to a third aspect, the present invention is directed to non-transitory computer readable storage media having a computer program embodied thereon. The computer program executable by a processor in a computing system to perform a method for managing the distribution of files across a plurality of client devices, the method including: (a) dividing a file into sections via a web server; (b) distributing one or more of the sections to each of a first subset of the plurality of client devices so that all sections of the file are distributed across the first subset of the plurality of client devices, each of the first subset of the plurality of client devices having storage space that is allocated to the web server; and (c) upon determining that an actual amount of sections that are currently available to the web server are below a threshold amount, redistributing the sections of the file to a second subset of the plurality of client devices determined to have storage space that is allocated to the web server.

### BRIEF DESCRIPTION OF THE DRAWINGS

FIG. 1 illustrates an exemplary cloud system for practicing aspects of the present technology.
FIG. 2 illustrates a flow diagram of an exemplary method for managing the distribution of files across a plurality of client devices.
FIG. 3 illustrates a flow diagram of another exemplary method for managing the distribution of files across a plurality of client devices.
FIG. 4 is a block diagram of an exemplary computing system that may be utilized to practice aspects of the present disclosure.

### DETAILED DESCRIPTION OF EXEMPLARY EMBODIMENTS

While this technology is susceptible of embodiment in many different forms, there is shown in the drawings and will herein be described in detail several specific embodiments with the understanding that the present disclosure is to be considered as an exemplification of the principles of the technology and is not intended to limit the technology to the embodiments illustrated.

Generally speaking, the systems and methods of the present technology may be directed to distributed file storage. More specifically, the systems and methods provided herein may be configured to divide files into sections and allocate the sections across a plurality of client devices in a distributed fashion. In some embodiments, the arrangement of client devices may resemble a distributed computing system such as a cloud.

In a cloud environment, the individual components of the cloud allocate their resources to the cloud. The resources are generally employed by another computing device(s) to facilitate the operation (e.g., workload) of a particular web based application or program. Therefore, the combined resources of the cloud that enable the web based application or program are greater than the resources of the individual computing systems that comprise the cloud. In some embodiments, the web based application or program may include, a multiplayer videogame, or other types of web based applications or programs that would be known to one of ordinary skill in the art with the present disclosure before them. It will be understood that the web based application or program may also be distributed within the cloud.

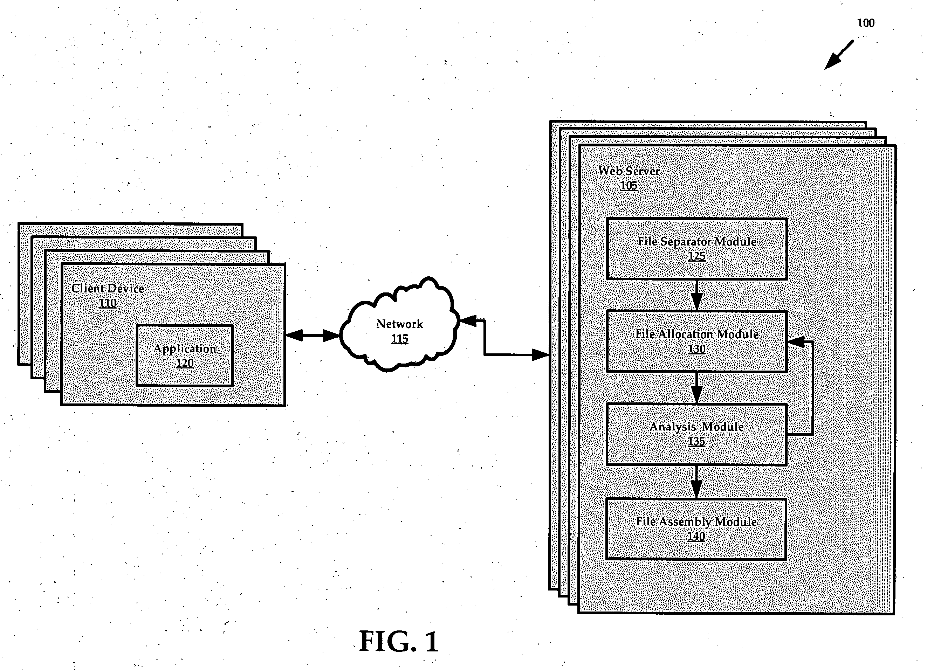

FIG. 1 illustrates an exemplary distributed computing system 100 for practicing aspects of the present technology. The system 100 is shown as including a web server 105 (shown as a plurality of web servers), and a plurality of client devices 110 that are communicatively coupled to the web server 105 via a network 115. The plurality of client devices 110 may be communicatively coupled to the web servers 105 and allocate computing resources to the web servers 105 such that the plurality of client devices 110 behave as a cloud computing system.

It will be understood that the network 115 may include any private or public network such as the Internet. It will also be understood that the web server 105 may include a plurality of web servers that are also communicatively coupled together in a cloud computing configuration.

Each of the client devices 110 may include a resource allocation application 120 that is configured to allow end users of client devices 110 to specify the amount and type of computing resources that are to be allocated to web server 105. The application 120 may be configured to run transparently (for example, in the system tray of the operating system) to the end user when the end user is not interacting with the application 120, so as to be unobtrusive to the end user. Additionally, the application 120 may be configured to generate graphical user interfaces that allow end users to interact with the application 120, for example, to specify which computing resources of the client device 110 are to be allocated to the web server 105.

The end user may also choose the times at which computing resources are allocated. For example, the end user may choose to allocate resources only when the user is not utilizing the client device 110 (e.g., when the end user has logged out of the client device, or when the client device goes into screensaver mode). In other embodiments, the end user may allocate resources even when the end user is currently utilizing the client device 110. Additionally, the end user may allocate resources or when the end user is interacting with the web based program or application. It will be understood that in some embodiments, the web based program may reside on an application server (not shown) or within the cloud of web servers 105.

The application 120 provides allocated resource data to the web server 105 to supply notification to the web server 105 that selected resources are available for use by the web server 105. Moreover, allocated resource data may also include data corresponding to sections of files that have already been distributed to the client device 110 by the web server 105. This provides the web server 105 with an additional mechanism for tracking sections of a file that are currently available to the web server 105. Additional mechanisms for tracking sections of files will be discussed in greater detail below.

The application 120 may provide the end user with resource utilization data that corresponds to the amount of distributed resources of the client device 110 that are currently being utilized by the web server 105, or an aggregate amount of resources that have been utilized by the web server 105 within a given period of time.

The web server 105 may include executable instructions for managing the distribution of files across the plurality of client devices 110, based upon available resource allocation data received from the application 120 of each client device 110. In some embodiments, the executable instructions may include a file separator module 125, a file allocation module 130, an analysis module 135, and a file assembly module 140. It is noteworthy that the web server 105 may include additional modules, engines, or components, and still fall within the scope of the present technology. As used herein, the term "module" may also refer to any of an application-specific integrated circuit (ASIC), an electronic circuit, a processor (shared, dedicated, or group) that executes one or more software or firmware programs, a combinational logic circuit, and/or other suitable components that provide the described functionality.

Rather than (or in addition to) storing files on the storage devices of the web server 105, the web server 105 may be configured to distribute sections of files to the plurality of client devices 110. Because storage space is a limited and costly quantity, the web server 105 may be configured to separate a file into sections and distribute the sections across the plurality of client devices 110. Moreover, storing only sections of a file on a plurality of client devices 110 enhances data security, as entire files are not stored on a single system where they may be subject to tampering or corruption. Because only sections of files are stored on the client devices 110, it is less likely that end users will be able to determine the file to which a section belongs.

Additionally, because the same section of a file may be stored on multiple client devices 110, intentional or unintentional errors introduced into individual sections by corruption, malware, viruses, and the like, may be determined before the section is utilized to reassemble a file. Sections with errors may be excluded from use by the file assembly module 140.

The file separator module 125 may be configured to separate a file into sections. It will be understood that the way in which the file separator module 125 separates the file into sections may depend upon the type of file that is being separated. Generally speaking, the file separator module 125 may utilize a file separating schema or algorithm that allows the file to not only be divided into sections, but the sections of the file may be reassembled into the file by way of the file separating schema or algorithm. For example, an image file may be separated into sections such as tiles. The file separating schema would include the number and position of each tile relative to the image. Therefore, the image may be reassembled using the file separating schema, similar to assembling a puzzle.

Additionally, the web server 105 may also distribute the file separating schema or algorithm that was utilized to divide the file into sections, to one or more of the client devices 110.

The file allocation module 130 may allocate the different sections of the file to each of the plurality of client devices 110 according to the allocated resource data received from the application 120 of the client device 110. That is, the file allocation module 130 may evaluate the allocated resource data of a client device 110 and allocate one or more sections of a file to the client device based upon the allocated resource data. For example, if the file allocation module 130 determines that the allocated resource data of the client device 110 is one megabyte of storage, the file allocation module 130 may store up to one megabyte of sections of one or more files to the distributed storage space of the client device 110. As stated above, the distributed storage space may include a portion of a local or portable hard drive associated with the client device 110.

An additional consideration is the actual availability of the distributed resources of the client device 110. For example, while a client device 110 allocates resources to the web server 105, the client device 110 may rarely be communicatively coupled to the web server 105. As such, the file allocation module 130 may be configured to evaluate not only the available resource allocation from the application 120 of the client device 110, but also determine the actual availability of the resources of the client device 110 over a given period of time.

For example, the application 120 of the client device 110 may specify an amount of allocated resources of one megabyte, but the file allocation module may determine that the resources of the client device 110 are rarely available. For example, the client device 110 may be offline a considerable amount of time, or may be online only during off peak periods (e.g., times when the workload of the web based application or program are inherently low). Based upon the actual resource allocation data obtained by the file allocation module 130, the file allocation module 130 may choose not to allocate sections to the client device 110, such as critical coefficients, due to the uncertainty in the availability of the resources.

According to some embodiments, the file allocation module 130 may be configured to initially distribute sections of the file to a first subset of the plurality of client devices 110. For example, if there are 1,000 client devices with available distributed resources, file allocation module 130 may distribute to a first subset of client devices, sections of the file. In this example, the first subset may be 10% of the client devices or 100 client devices, although other percentages may also be utilized in accordance with the present technology.

It will be understood that the file allocation module 130 may record the location (e.g., client device) to which each of the sections of the file have been distributed along with the contents of the section. This information allows each section to be tracked for later retrieval by the file assembly module 140. Additionally, the file allocation module 130 may record the location and contents for each section of a file in a lookup table that may also be distributively stored on one or more client devices 110.

After the file allocation module 130 has distributed the sections of the file to the first subset of client devices, the analysis module 135 may be configured to monitor the applications 120 of the client devices 110 to determine if a threshold amount of critical sections are currently being made available to the web server 105.

It is noteworthy that the threshold amount of critical sections that should be currently available to the web server 105 may be specified by a web server administrator, and may vary according to the relative importance of the file. That is, files that are extremely important to the operation of the web based application or program may require the distribution higher threshold amounts of critical sections.

If the analysis module 135 determines that the actual amount of critical sections is below the threshold amount, the file allocation module 130 may be executed to redistribute the sections of the file to a second subset of the plurality of client devices 110. The file allocation module 130 may redistribute the sections of the files to additional subsets of client devices 110 until threshold amount of critical sections is available for use to the web server.

Upon receiving a request to obtain a file from a client device 110, the web server 105 may execute the file assembly module 140 to gather sections of files from the plurality of client devices 110 (e.g., subsets of client devices to which sections of a file have been distributed). The file assembly module 140 may utilize the lookup table created by the file allocation module 130 to determine the location of the sections of the file. The file assembly module 140 may also gather the file separating schema or algorithm (either in whole, or from segments) from the client devices 110.

In response to the request, the analysis module 135 may be executed to determine if a threshold amount of sections are being made available for use to the web server 105 by the first subset of the plurality of client devices 110. If there are a threshold amount of sections available, the file assembly module 140 may assemble the sections of the file together according to the file separating schema or algorithm. If the analysis module 135 determines that threshold amount of sections are not available, the file allocation module 125 may be executed to redistribute the sections to a second subset of the plurality of client devices.

For the purposes of this example, we are assuming that a threshold amount of sections are available. Because the same critical sections may be distributed to many different client devices 110, the analysis module 135 may be configured to evaluate the similar sections gathered from the client devices 110 to determine the integrity of the data of each of the sections relative to one another. For example, the file assembly module 140 may gather the same critical section from five separate client devices. The analysis module 135 may evaluate the data of the same critical sections relative to one another to determine differences therebetween. In this example, if four of the five sections contain identical data, and the fifth includes discrepant data, the section with discrepant data may be excluded from use by the file assembly module 140.

Utilizing the file separating schema or algorithm, and the sections of the file, the file assembly module 140 may reassemble the file. Once reassembled, the file assembly module 140 may then provide the file to the client device 110 from which the request was received.

In some embodiments, the files may include screenshots that are distributed across the plurality of client devices 110. The screenshots may include enhanced screenshots as described with greater detail in U.S. Patent Application Serial Number 13/008,854, entitled "Systems and Methods for Generating Enhanced Screenshots", filed on January 18, 2011. The screenshots may be utilized within the context of a multiplayer videogame (e.g., web based program) that resides on the web server 105. Because each of the client devices 110 may desire efficient operation (e.g., reduced latency) of the multiplayer videogame, the client devices 110 may allocate the computing resources of their client device 110 to the efficient operation of the multiplayer videogame. For example, the web server 105 may divide the enhanced screenshots into sections and distribute the sections across the plurality of client devices 110. This reduces the amount of data that is written to the storage mediums of the web servers 105 that facilitate the videogame, and may reduce latency. Additionally, distributing the screenshots to the client devices 110 reduces the overall operating costs of web servers 105.

Because storage resources are limited and costly, in addition to dividing the file, the file may also be compressed to further decrease the size of the file. For example, an enhanced screenshot as described above may include an image file in a variety of standard formats (e.g., JPEG, TIFF, PNG, and so forth). Because image files may be compressed via processes such as transform coding (e.g., wavelet transform), the image file may be compressed into coefficients, the coefficients divided into sections, and the sections distributed to the plurality of client devices 110.

The file separator module 125 may be configured to transform code the file to produce a plurality of coefficients by way of a wavelet transform algorithm. Next, the file separator module 125 may aggregate the coefficients into a plurality of sections before the file allocation module 130 distributes the plurality of sections across the first subset of the plurality of client devices.

A non-limiting example of compression may include compressing an image file into a JPEG2000 format by applying a wavelet transform to the screenshot to convert the individual pixels of the screenshot into coefficients. These coefficients may be quantized and encoded (either via entropy encoding or run length encoding) to generate a compressed JPEG2000 format image file. One skilled in art will recognize that certain embodiments of this technology allow for compressing an image file into a JPEG format using Discrete Cosine Transform.

Instead of quantizing and encoding the screenshot before it is divided, the file separator module 125 may transform code the screenshot to convert the individual pixels of the screenshot into coefficients. One or more of the coefficients may be aggregated together into sections that are then distributed across the plurality of client devices 110. It will be understood that in some embodiments, all of the coefficients of the image file may be aggregated into sections and distributed across the plurality of client devices 110 such that all coefficients of the image file are distributed across the plurality of client devices 110. Moreover, as stated above, the same sections of coefficients may be distributed to different client devices 110 for redundancy.

Some of the coefficients that are grouped together by the file separator module 125 may be more critical to the reassembly of the image file and therefore may be referred to as "critical coefficients". That is, the file assembly module 140 may be unable to reassemble the image file without these critical coefficients. As such, sections that contain "critical coefficients" may be referred to as "critical sections".

According to some embodiments, if the file is an image file that has been transform coded into coefficients, the image file may be understood to include the coefficients and/or one or more segments of wavelet transform algorithm data. To reassemble the image file, the file assembly module 140 assembles the segments of the wavelet transform algorithm data and the coefficients (i.e., the coefficients within the sections). The file assembly module 140 may then quantize and encode the coefficients according to the wavelet transform algorithm to produce a compressed JPEG format image file.

While the above described examples contemplate the use of image files, one of ordinary skill in the art will appreciate that other types of files, such as video files, documents, audio files, and so forth, may likewise be utilized in accordance with the present technology.

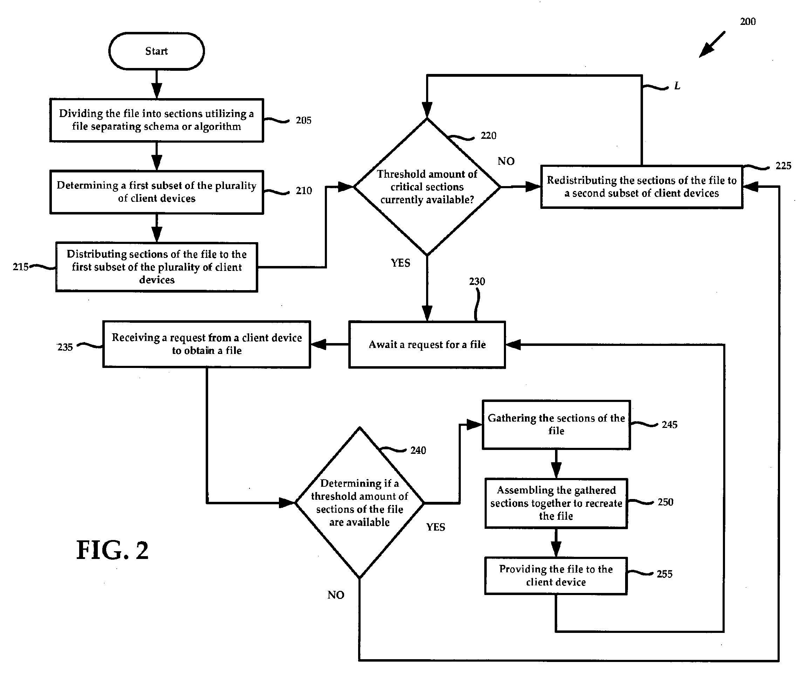

FIG. 2 illustrates a flow chart of an exemplary method 200 for managing the distribution of files across a plurality of client devices. The method 200 may include the step 205 of dividing the file into sections utilizing a file separating schema or algorithm. It will be understood that the file separating schema or algorithm allows the file to later be reassembled from the individual sections.

Next, the method 200 may include a step 210 of determining a first subset of the plurality of client devices that have made allocated resources available to the web server. The method 200 then includes the step 215 of distributing sections of the file to the first subset of the plurality of client devices such that all sections of the file are distributed across the first subset of the plurality of client devices.

After the distribution of sections, the system may monitor the availability of the sections to ensure that if a request for the image file is received, that enough critical sections of the image file are available to assemble the image file. Therefore, the method 200 may include the step 220 of determining if a threshold amount of critical sections are currently available to the web server.

If the a threshold amount of critical sections are not currently being made available to the web server, the method may include the step 225 of redistributing the sections of the file to a second subset of the plurality of client devices determined to have storage space that is allocated to the web server. If a threshold amount of critical sections are available, the method 200 includes the step 230 of waiting to receive a request for the file from a client device.

The steps 220 of determining and step 225 of redistributing may occur in a continuous loop, shown herein as loop L, such that the system always has a threshold amount of critical sections available for use to the web server.

The method 200 may also include the step 235 of receiving a request from a client device to obtain a file. Based upon the request, the method 200 may then include the step 240 of determining if a threshold amount of sections of the file are available to the web server. If a threshold amount of sections of the file are available, the method includes the step 245 of gathering the sections of the file from the plurality of client devices. If the threshold amount of sections of the file is not available, the method 200 returns to the step 225 of redistributing the sections of the file to additional subsets of client devices.

Once gathered, the method 200 may include the step 250 of assembling the gathered sections together to recreate the file. It will be understood that the step 250 of assembling the sections of the file may utilize the file separating schema or algorithm that was utilized to divide the file into sections.

Next, the method 200 may include the step 255 of providing the recreated file the client device from which the request was received, followed by returning to step 230 of awaiting a request for an image file from a client device.

It should be understood that the steps of the exemplary methods set forth herein are not necessarily required to be performed in the order described, and the order of the steps of such methods should be understood to be merely exemplary. Likewise, additional steps may be included in such methods, and certain steps may be omitted or combined, in methods consistent with various embodiments of the present invention.

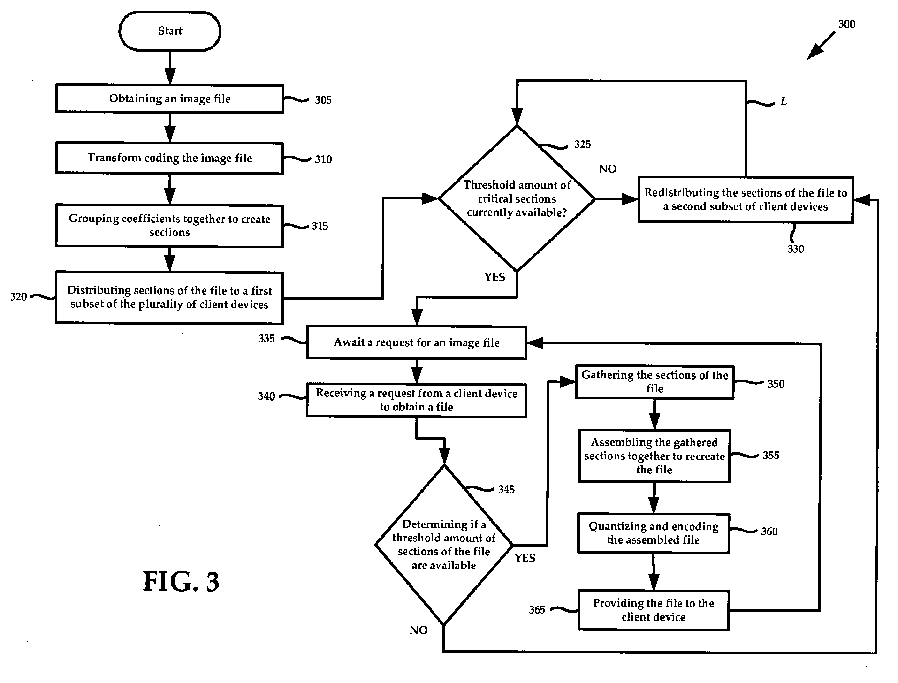

FIG. 3 illustrates a flow chart of another exemplary method 300 for managing the distribution of files across a plurality of client devices. The exemplary method 300 is directed to managing the distribution of image files. The method 300 may include the step 305 of obtaining an image file, such as a screenshot.

Next, the method may include the step 310 of transform coding the image file to reduce the size of the image file. Transform coding includes applying a wavelet transform algorithm to the image file. To be sure, one of ordinary skill in the art will appreciate that many types of wavelet transform algorithms may be utilized in accordance with the present technology, although specific implementational details regarding each of the wavelet transform algorithms are not provided for the sake of brevity. It will be understood that the wavelet transform algorithm utilized may result in either both lossy and lossless compression, depending upon the algorithm.

Once the image file has been transform coded, the method may include the step 315 of grouping coefficients together to create sections. Because the sections include coefficients, the sections are considerably smaller in size than sections that include unprocessed pixel data.

The method 300 then includes the step 320 of distributing sections of the file to a first subset of the plurality of client devices such that all sections of the file are distributed across the first subset of the plurality of client devices.

After the distribution of sections, the system may monitor the availability of the sections to ensure that if a request for the image file is received, that enough critical sections of the image file are available to assemble the image file. Therefore, the method 300 may include the step 325 of determining if a threshold amount of critical sections are currently available to the web server.

If the a threshold amount of critical sections are not currently being made available to the web server, the method may include the step 330 of redistributing the sections of the file to a second subset of the plurality of client devices determined to have storage space that is allocated to the web server. If a threshold amount of critical sections are available, the method 300 includes the step 335 of awaiting a request for an image file from a client device.

The steps 325 of determining and step 330 of redistributing may occur in a continuous loop, shown herein as loop L, such that the system always has a threshold amount of critical sections available for use to the web server.

The method 300 may also include the step 340 of receiving a request from a client device to obtain a file. Based upon the request, the method 300 may then include the step 345 of determining if a threshold amount of sections of the file are available to the web server. Although the method 300 includes monitoring the availability of the sections, client devices may become unexpectedly unavailable. Additionally, because delays in communication of available allocated resource data between the application on the client device and the analysis module of the web server may exist, the system may assume that the client device is available, when in fact, the client device is unavailable.

If a threshold amount of sections of the file are, in fact, available, the method includes the step 350 of gathering the sections of the file from the plurality of client devices. If the threshold amount of sections of the file is not available, the method 300 returns to the step 330 of redistributing the sections of the file to additional subsets of client devices.

Once gathered, the method 300 may include the step 355 of assembling the gathered sections together to recreate the image file. After the image file has been reassembled, the method 300 may include the step 360 of quantizing and encoding the reassembled file. The method 300 may include the step 365 of providing the recreated file to the client device from which the request was received.

Finally, the method 300 returns to step 335 of awaiting a request for an image file from a client device.

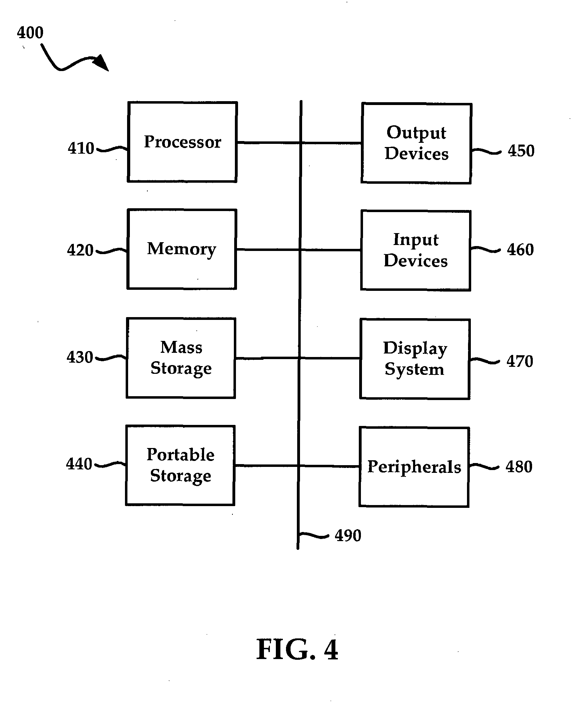

FIG. 4 illustrates an exemplary computing system 400 that may be used to implement an embodiment of the present technology. Either of the client devices 110 and the web server 105 may include one or more of the components of computing system 400. The computing system 400 of FIG. 4 includes one or more processors 410 and memory 420. Main a memory store 420 stores, in part, instructions and data for execution by processor 410. Main a memory store 420 can store the executable code when the system 400 is in operation. The system 400 of FIG. 4 may further include a mass storage device 430, portable storage medium drive(s) 440, output devices 450, user input devices 460, a graphics display 440, and other peripheral devices 480.

The components shown in FIG. 4 are depicted as being connected via a single bus 490. The components may be connected through one or more data transport means. Processor 410 and main a memory store 420 may be connected via a local microprocessor bus, and the mass storage device 430, peripheral device(s) 480, portable storage device 440, and display system 470 may be connected via one or more input/output (I/O) buses.

Mass storage device 430, which may be implemented with a magnetic disk drive or an optical disk drive, is a non-volatile storage device for storing data and instructions for use by processor unit 410. Mass storage device 430 can store the system software for implementing embodiments of the present technology for purposes of loading that software into main a memory store 420.

Portable storage device 440 operates in conjunction with a portable non-volatile storage medium, such as a floppy disk, compact disk or digital video disc, to input and output data and code to and from the computing system 400 of FIG. 4. The system software for implementing embodiments of the present technology may be stored on such a portable medium and input to the computing system 400 via the portable storage device 440.

Input devices 460 provide a portion of a user interface. Input devices 460 may include an alphanumeric keypad, such as a keyboard, for inputting alphanumeric and other information, or a pointing device, such as a mouse, a trackball, stylus, or cursor direction keys. Additionally, the system 400 as shown in FIG. 4 includes output devices 450. Suitable output devices include speakers, printers, network interfaces, and monitors.

Display system 470 may include a liquid crystal display (LCD) or other suitable display device. Display system 470 receives textual and graphical information, and processes the information for output to the display device.

Peripherals 480 may include any type of computer support device to add additional functionality to the computing system. Peripheral device(s) 480 may include a modem or a router.

The components contained in the computing system 400 of FIG. 4 are those typically found in computing systems that may be suitable for use with embodiments of the present technology and are intended to represent a broad category of such computer components that are well known in the art. Thus, the computing system 400 of FIG. 4 can be a personal computer, hand held computing system, telephone, mobile computing system, workstation, server, minicomputer, mainframe computer, or any other computing system. The computer can also include different bus configurations, networked platforms, multi-processor platforms, etc. Various operating systems can be used including UNIX, Linux, Windows, Macintosh OS, Palm OS, and other suitable operating systems.

Some of the above-described functions may be composed of instructions that are stored on storage media (e.g., computer-readable medium). The instructions may be retrieved and executed by the processor. Some examples of storage media are memory devices, tapes, disks, and the like. The instructions are operational when executed by the processor to direct the processor to operate in accord with the technology. Those skilled in the art are familiar with instructions, processor(s), and storage media.

It is noteworthy that any hardware platform suitable for performing the processing described herein is suitable for use with the technology. The terms "computer-readable storage medium" and "computer-readable storage media" as used herein refer to any medium or media that participate in providing instructions to a CPU for execution. Such media can take many forms, including, but not limited to, non-volatile media, volatile media and transmission media. Non-volatile media include, for example, optical or magnetic disks, such as a fixed disk. Volatile media include dynamic memory, such as system RAM. Transmission media include coaxial cables, copper wire and fiber optics, among others, including the wires that comprise one embodiment of a bus. Transmission media can also take the form of acoustic or light waves, such as those generated during radio frequency (RF) and infrared (IR) data communications. Common forms of computer-readable media include, for example, a floppy disk, a flexible disk, a hard disk, magnetic tape, any other magnetic medium, a CD-ROM disk, digital video disk (DVD), any other optical medium, any other physical medium with patterns of marks or holes, a RAM, a PROM, an EPROM, an EEPROM, a FLASHEPROM, any other memory chip or data exchange adapter, a carrier wave, or any other medium from which a computer can read.

Various forms of computer-readable media may be involved in carrying one or more sequences of one or more instructions to a CPU for execution. A bus carries the data to system RAM, from which a CPU retrieves and executes the instructions. The instructions received by system RAM can optionally be stored on a fixed disk either before or after execution by a CPU.

The term "and/or" may indicate that any combination of elements connected by "and/or" may be used. For example, two words or expressions in a phrase using "and/or" may mean one or the other or both.

The above description is illustrative and not restrictive. Many variations of the technology will become apparent to those of skill in the art upon review of this disclosure. The scope of the technology should, therefore, be determined not with reference to the above description, but instead should be determined with reference to the appended claims.

## Claims

1. A method for managing the distribution of files across a plurality of client devices (110), comprising:
dividing (205) a file into sections via a web server (105); and
distributing (215) one or more of the sections to each of a first subset of the plurality of client devices so that all sections of the file are distributed across the first subset of the plurality of client devices, each of the first subset of the plurality of client devices having storage space for storing sections that is allocated to the web server (105), wherein some sections of the file are redundantly stored on multiple client devices (110);
**characterized in that**
after distributing the sections of the file to the first subset of client devices for storing, monitoring each of the first subset of the plurality of client devices to determine if each of the first subset of the plurality of client devices to which one or more sections has been distributed and stored is currently making the one or more stored sections of the file available to the web server (105); and
upon determining (220) that an actual amount of sections that are stored for the file currently available to the web server (105) are below a threshold amount, redistributing (225) the sections of the file to a second subset of the plurality of client devices determined to have storage space that is allocated to the web server (105).

2. The method according to claim 1, wherein upon determining (220) that an actual amount of sections that are currently available to the web server (105) are below a threshold amount, redistributing the section of the file to a third subset of the plurality of client devices determined to have storage space that is allocated to the web server (105).

3. The method according to claim 1 or 2, further comprising:
gathering (245) sections of the file that have been distributed to at least one of the first subsets and the second subsets of the plurality of client devices;
assembling (250) the file from the gathered sections, at the web server (105); and
providing (255) the assembled file to one or more client devices (110) that are communicatively coupled to the web server (105).

4. The method according to any preceding claim, wherein distributing (215) further includes:
transform coding (310) the file to produce a plurality of coefficients by way of a wavelet transform algorithm;
aggregating (315) the coefficients into a plurality of sections; and
distributing (320) the plurality of sections across the first subset of the plurality of client devices.

5. The method according to claim 4, further comprising dividing the wavelet transform algorithm into segments and distributing the segments to one or more client devices.

6. The method according to claim 5, further comprising assembling the wavelet transformed file by:
assembling the algorithm by obtaining the segments distributed to one or more client devices (110);
obtaining (350) the plurality of sections distributed across the first subset of the plurality of client devices;
reassembling (355) the coefficients from the obtained sections, according to the wavelet transform algorithm; and
quantizing and encoding (360) the coefficients to produce the wavelet transformed file.

7. The method according to claim 6, prior to assembling the wavelet transformed file, determining (240, 345) if a threshold amount of sections are being made available for use to the web server (105) by the first subset of the plurality of client devices; assembling (355) the wavelet transformed file if the threshold amount of sections are being made available; and redistributing (330) the sections to the second subset of the plurality of client devices if the threshold amount of sections are not being made available.

8. The method according to any preceding claim, wherein the second subset includes at least a portion of the first subset.

9. A web server for managing the distribution of files across a plurality of client devices (110), comprising:
a memory for storing executable instructions for managing the distribution of files across a plurality of client devices; and
a processor configured to execute the instructions stored in the memory, the instructions including:
a file separator module (125) configured to divide (205) a file into sections; and
a file allocation module (130) configured to distribute (215) one or more of the sections to each of a first subset of the plurality of client devices so that all sections of the file are distributed across the first subset of the plurality of client devices, each of the first subset of the plurality of client devices having storage space for storing sections that is allocated to the web server (105), wherein some sections of the file are redundantly stored on multiple client devices (110);
**characterized in that**
the web server (105) further includes an analysis module (135), after the file allocation module (130) has distributed the sections of the file to the first subset of client devices for storing the analysis module (135) being configured to monitor a resource allocation application (120) associated with each of the first subset of the plurality of client devices to determine if each of the first subset of the plurality of client devices to which one or more sections has been distributed and stored is currently making the one or more stored sections of the file available to the web server (105); and
upon determining (220) that an actual amount of sections that are stored for the file currently available to the web server (105) are below a threshold amount, the file allocation module (130) is further configured to redistribute (225) the section of the file to a second subset of the plurality of client devices determined to have storage space that is allocated to the web server (105).

10. The web server according to claim 9, wherein the resource allocation application (120) is configured to provide the web server (105) with available resource allocation data that includes an amount of allocated resources that are available to the web server (105).

11. The web server according to claim 9 or 10, wherein the distribution of sections to each of the first subset of the plurality of client devices by the file allocation module (130) are based upon the amount of allocated resources that are made available to the web server (105) by the first subset of the plurality of client devices, wherein an amount of allocated resources that are being made available to the web server are preferably end user defined.

12. The web server according to claim 9, 10 or 11, wherein the web server (105) further includes a file assembly module (140) configured to:
gather (245) sections of the file that have been distributed to at least one of the first subset and the second subset of the plurality of client devices;
assemble (250) the file at the web server (105) from the gathered sections; and
provide (255) the assembled file to one or more client devices (110) that are communicatively coupled to the web server (105).

13. A non-transitory computer readable storage medium having a computer program embodied thereon, the computer program executable by a processor in a computing system to perform a method for managing the distribution of files across a plurality of client devices according to any of claims 1-8.

## Patentansprüche

1. Verfahren zum Verwalten der Verteilung von Dateien an eine Vielzahl von Client-Vorrichtungen (110), das umfasst:
Unterteilen (205) einer Datei durch einen Webserver (105)in Abschnitte; und
Verteilen (215) von einem oder mehreren der Abschnitte an jede einer ersten Teilmenge der Vielzahl von Client-Vorrichtungen, so dass alle Abschnitte der Datei über die erste Teilmenge der Vielzahl von Client-Vorrichtungen verteilt werden, wobei jede der ersten Teilmenge der Vielzahl von Client-Vorrichtungen Speicherplatz zum Speichern von Abschnitten aufweist, der dem Webserver (105) zugewiesen ist, wobei einige Abschnitte der Datei auf mehreren Client-Vorrichtungen (110) redundant gespeichert werden;
**gekennzeichnet durch**
Überwachen jeder der ersten Teilmenge der Vielzahl von Client-Vorrichtungen nach dem Verteilen der Datei-Abschnitte an die erste Teilmenge von Client-Vorrichtungen zum Speichern, um festzustellen, ob jede der ersten Teilmenge der Vielzahl von Client-Vorrichtungen, an die bzw. auf der eine oder mehrere Abschnitte verteilt und gespeichert wurden, gegenwärtig den einen oder die mehreren gespeicherten Abschnitte der Datei dem Webserver (105) zur Verfügung stellt; und
beim Feststellen (220), dass eine tatsächliche Menge an für die Datei gespeicherten Abschnitten, die gegenwärtig für den Webserver (105) verfügbar sind, unter einer Schwellenmenge liegt, erneutes Verteilen (225) der Abschnitte der Datei zu einer zweiten Teilmenge der Vielzahl von Client-Vorrichtungen, von denen festgestellt wurde, dass sie dem Webserver (105) zugewiesenen Speicherplatz aufweisen.

2. Verfahren nach Anspruch 1, wobei beim Feststellen (220), dass eine tatsächliche Menge von Abschnitten, die gegenwärtig für den Webserver (105) verfügbar sind, unter einer Schwellenmenge liegt, erneutes Verteilen des Abschnitts der Datei zu einer dritten Teilmenge der Vielzahl von Client-Vorrichtungen, von denen festgestellt wurde, dass sie dem Webserver (105) zugewiesenen Speicherplatz aufweisen.

3. Verfahren nach Anspruch 1 oder 2, das ferner umfasst:
Sammeln (245) von Abschnitten der Datei, die an mindestens eine der ersten Teilmengen und der zweiten Teilmengen der Vielzahl von Client-Vorrichtungen verteilt wurde;
Zusammensetzen (250) der Datei aus den gesammelten Abschnitten am Webserver (105); und
Bereitstellen (255) der zusammengesetzten Datei an eine oder mehrere Client-Vorrichtungen (110), die kommunikativ mit dem Webserver (105) gekoppelt sind.

4. Verfahren nach einem vorangehenden Anspruch, wobei das Verteilen (215) ferner umfasst:
Transformationskodieren (310) der Datei, um durch einen Wavelet-Transformationsalgorithmus eine Vielzahl von Koeffizienten zu erzeugen;
Zusammensetzen (315) der Koeffizienten zu einer Vielzahl von Abschnitten; und
Verteilen (320) der Vielzahl von Abschnitten über die erste Teilmenge der Vielzahl von Client-Vorrichtungen.

5. Verfahren nach Anspruch 4, das ferner das Unterteilen des Wavelet-Transformationsalgorithmus in Segmente und das Verteilen der Segmente an eine oder mehrere Client-Vorrichtungen umfasst.

6. Verfahren nach Anspruch 5, das ferner das Zusammensetzen der Wavelet-transformierten Datei umfasst durch:
Zusammensetzen des Algorithmus durch Erhalten der an eine oder mehrere Client-Vorrichtungen (110) verteilten Segmente;
Erhalten (350) der Vielzahl von Abschnitten, die über die erste Teilmenge der Vielzahl von Client-Vorrichtungen verteilt sind;
erneutes Zusammensetzen (355) der Koeffizienten aus den erhaltenen Abschnitten gemäß dem Wavelet-Transformationsalgorithmus; und
Quantisieren und Kodieren (360) der Koeffizienten, um die Wavelet-transformierte Datei zu erzeugen.

7. Verfahren nach Anspruch 6, Feststellen (240, 345) vor dem Zusammensetzen der Wavelet-transformierten Datei, ob durch die erste Teilmenge der Vielzahl von Client-Vorrichtungen eine Schwellenmenge von Abschnitten zur Verwendung für den Webserver (105) zur Verfügung gestellt wird;
Zusammensetzen (355) der Wavelet-transformierten Datei, falls die Schwellenmenge von Abschnitten zur Verfügung gestellt wird; und erneutes Verteilen (330) der Abschnitte zur zweiten Teilmenge der Vielzahl von Client-Vorrichtungen, falls die Schwellenmenge von Abschnitten nicht zur Verfügung gestellt wird.

8. Verfahren nach einem vorangehenden Anspruch, wobei die zweite Teilmenge zumindest einen Teil der ersten Teilmenge umfasst.

9. Webserver zum Verwalten der Verteilung von Dateien an eine Vielzahl von Client-Vorrichtungen (110), der umfasst:
einen Speicher zum Speichern von ausführbaren Befehlen zum Verwalten der Verteilung von Dateien an eine Vielzahl von Client-Vorrichtungen; und
einen Prozessor, der dazu ausgelegt ist, die im Speicher gespeicherten Befehle auszuführen, wobei die Befehle umfassen:
ein Dateitrennmodul (125), das dazu ausgelegt ist, eine Datei in Abschnitte zu unterteilen (205); und
ein Dateizuweisungsmodul (130), das dazu ausgelegt ist, einen oder mehrere der Abschnitte zu jeder einer ersten Teilmenge der Vielzahl von Client-Vorrichtungen zu verteilen (215), so dass alle Abschnitte der Datei über die erste Teilmenge der Vielzahl von Client-Vorrichtungen verteilt werden, wobei jede der ersten Teilmenge der Vielzahl von Client-Vorrichtungen Speicherplatz zum Speichern von Abschnitten aufweist, der dem Webserver (105) zugewiesen ist, wobei einige Abschnitte der Datei auf mehreren Client-Vorrichtungen (110) redundant gespeichert werden;
**dadurch gekennzeichnet, dass**
der Webserver (105) ferner ein Analysemodul (135) umfasst, wobei das Analysemodul (135) nachdem das Dateizuweisungsmodul (130) die Abschnitte der Datei zur ersten Teilmenge von Client-Vorrichtungen zum Speichern verteilt hat dazu ausgelegt ist, eine Betriebsmittelzuweisungsanwendung (120) zu überwachen, die jede der ersten Teilmenge der Vielzahl von Client-Vorrichtungen zugeordnet ist, um festzustellen, ob jede der ersten Teilmenge der Vielzahl von Client-Vorrichtungen, an die bzw. auf der eine oder mehrere Abschnitte verteilt und gespeichert wurden, gegenwärtig den einen oder die mehreren gespeicherten Abschnitte der Datei dem Webserver (105) zur Verfügung stellt; und
beim Festellen (220), dass eine tatsächliche Menge an für die Datei gespeicherten Abschnitten, die gegenwärtig für den Webserver (105) verfügbar sind, unter einer Schwellenmenge liegt, das Dateizuweisungsmodul (130) ferner dazu ausgelegt ist, den Abschnitt der Datei zu einer zweiten Teilmenge der Vielzahl von Client-Vorrichtungen erneut zu verteilen (225), von denen festgestellt wurde, dass sie Speicherplatz aufweisen, der dem Webserver (105) zugewiesen ist.

10. Webserver nach Anspruch 9, wobei die Betriebsmittelzuweisungsanwendung (120) dazu ausgelegt ist, den Webserver (105) mit verfügbaren Betriebsmittelzuweisungsdaten zu versorgen, die eine Menge an zugewiesenen, für den Webserver (105) zur Verfügung stehenden Betriebsmitteln umfassen.

11. Webserver nach Anspruch 9 oder 10, wobei die Verteilung von Abschnitten zu jeder der ersten Teilmenge der Vielzahl von Client-Vorrichtungen durch das Dateizuweisungsmodul (130) auf der Menge an zugewiesenen Betriebsmitteln basiert, die für den Webserver (105) durch die erste Teilmenge der Vielzahl von Client-Vorrichtungen zur Verfügung gestellt werden, wobei eine Menge von zugewiesenen Betriebsmitteln, die für den Webserver zur Verfügung gestellt werden, vorzugsweise vom Endbenutzer definiert sind.

12. Webserver nach Anspruch 9, 10 oder 11, wobei der Webserver (105) ferner ein Dateizusammensetzungsmodul (140) umfasst, das dazu ausgelegt ist:
Abschnitte der Datei zu sammeln (245), die an mindestens eine der ersten Teilmenge und der zweiten Teilmenge der Vielzahl von Client-Vorrichtungen verteilt wurden;
die Datei am Webserver (105) aus den gesammelten Abschnitten zusammenzusetzen (250); und
die zusammengesetzte Datei einer oder mehreren kommunikativ mit dem Webserver (105) gekoppelten Client-Vorrichtungen (110) bereitzustellen (255).

13. Nichtflüchtiges computerlesbares Speichermedium mit einem darauf enthaltenen Computerprogramm, wobei das Computerprogramm von einem Prozessor in einem Rechensystem ausführbar ist, um ein Verfahren zum Verwalten der Verteilung von Dateien an eine Vielzahl von Client-Vorrichtungen nach einem der Ansprüche 1-8 durchzuführen.

## Revendications

1. Procédé de gestion de la répartition de fichiers sur une pluralité de dispositifs clients (110), comprenant les étapes consistant à :
diviser (205) un fichier en sections par le biais d'un serveur de réseau Web (105), et
répartir (215) une ou plusieurs des sections sur chaque dispositif d'un premier sous-ensemble de la pluralité de dispositifs clients de sorte que toutes les sections du fichier soient réparties sur le premier sous-ensemble de la pluralité de dispositifs clients, chaque dispositif du premier sous-ensemble de la pluralité de dispositifs clients ayant un espace de mémorisation pour mémoriser des sections qui est alloué au serveur de réseau Web (105), dans lequel certaines sections du fichier sont mémorisées de manière redondante sur de multiples dispositifs clients (110),
**caractérisé par**
après la répartition des sections du fichier sur le premier sous-ensemble de dispositifs clients en vue d'une mémorisation, la surveillance de chaque dispositif du premier sous-ensemble de la pluralité de dispositifs clients pour déterminer si chaque dispositif du premier sous-ensemble de la pluralité de dispositifs clients sur lequel une ou plusieurs sections ont été réparties et mémorisées rend actuellement disponibles pour le serveur de réseau Web (105) les unes ou plusieurs sections du fichier, et
lors de la détermination (220) du fait qu'une quantité actuelle des sections qui sont mémorisées pour le fichier actuellement disponibles pour le serveur de réseau Web (105) est inférieure à une quantité de seuil, une nouvelle répartition (225) des sections du fichier sur un deuxième sous-ensemble de la pluralité de dispositifs clients déterminés comme ayant un espace de mémorisation qui est alloué au serveur de réseau Web (105).

2. Procédé selon la revendication 1, dans lequel lors de la détermination (220) du fait qu'une quantité actuelle des sections qui sont actuellement disponibles pour le serveur de réseau Web (105) est inférieure à une quantité de seuil, une nouvelle répartition de la section du fichier vers un troisième sous-ensemble de la pluralité de dispositifs clients déterminés comme ayant un espace de mémorisation qui est alloué au serveur de réseau Web (105).

3. Procédé selon la revendication 1 ou 2, comprenant en outre les étapes consistant à :
regrouper (245) les sections du fichier qui ont été réparties sur au moins un des premiers sous-ensembles et des deuxièmes sous-ensembles de la pluralité de dispositifs clients,
assembler (250) le fichier à partir des sections regroupées, au niveau du serveur de réseau Web (105), et
fournir (255) le fichier assemblé à un ou plusieurs dispositifs clients (110) qui sont reliés en communication au serveur de réseau Web (105).

4. Procédé selon l'une quelconque des revendications précédentes, dans lequel l'étape consistant à répartir (215) inclut en outre les étapes consistant à :
coder par transformation (310) le fichier pour produire une pluralité de coefficients au moyen d'un algorithme de transformation en ondelettes,
agréger (315) les coefficients dans une pluralité de sections, et
répartir (320) la pluralité de sections sur le premier sous-ensemble de la pluralité de dispositifs clients.

5. Procédé selon la revendication 4, comprenant en outre l'étape consistant à diviser l'algorithme de transformation en ondelettes en segments et à répartir les segments sur un ou plusieurs dispositifs clients.

6. Procédé selon la revendication 5, comprenant en outre l'étape consistant à assembler le fichier transformé par transformation en ondelettes en :
assemblant l'algorithme en obtenant les segments répartis sur un ou plusieurs dispositifs clients (110),
obtenant (350) la pluralité de sections réparties sur le premier sous-ensemble de la pluralité de dispositifs clients,
réassemblant (355) les coefficients à partir des sections obtenues, selon l'algorithme de transformation en ondelettes, et
quantifiant et codant (360) les coefficients pour produire le fichier transformé par transformation en ondelettes.

7. Procédé selon la revendication 6, comprenant avant l'assemblage du fichier transformé par transformation en ondelettes, la détermination (240, 345) du fait qu'une quantité de seuil des sections sont rendues disponibles pour une utilisation pour le serveur de réseau Web (105) par le premier sous-ensemble de la pluralité de dispositifs clients, l'assemblage (355) du fichier transformé par transformation en ondelettes si la quantité de seuil des sections sont rendues disponibles, et la nouvelle répartition (330) des sections sur le deuxième sous-ensemble de la pluralité de dispositifs clients si la quantité de seuil des sections ne sont pas rendues disponibles.

8. Procédé selon l'une quelconque des revendications précédentes, dans lequel le deuxième sous-ensemble inclut au moins une partie du premier sous-ensemble.

9. Serveur de réseau Web destiné à gérer la répartition des fichiers sur une pluralité de dispositifs clients (110), comprenant :
une mémoire destinée à mémoriser des instructions exécutables pour la gestion de la répartition des fichiers sur une pluralité de dispositifs clients, et
un dispositif de traitement configuré pour exécuter les instructions mémorisées dans la mémoire, les instructions incluant :
un module de séparateur de fichier (125) configuré pour diviser (205) un fichier en sections, et
un module d'allocation de fichier (130) configuré pour répartir (215) une ou plusieurs des sections sur chaque dispositif d'un premier sous-ensemble de la pluralité de dispositifs clients de sorte que toutes les sections du fichier soient réparties sur le premier sous-ensemble de la pluralité de dispositifs clients, chaque dispositif du premier sous-ensemble de la pluralité de dispositifs clients ayant un espace de mémorisation pour mémoriser des sections qui est alloué au serveur de réseau Web (105), dans lequel certaines sections du fichier sont mémorisées de manière redondante sur de multiples dispositifs clients (110),
**caractérisé en ce que**
le serveur de réseau Web (105) inclut en outre un module d'analyse (135), après que le module d'allocation de fichier (130) a réparti les sections du fichier sur le premier sous-ensemble de dispositifs clients en vue d'une mémorisation, le module d'analyse (135) étant configuré pour surveiller une application d'allocation de ressources (120) associée à chaque dispositif du premier sous-ensemble de la pluralité de dispositifs clients pour déterminer si chaque dispositif du premier sous-ensemble de la pluralité de dispositifs clients auquel une ou plusieurs sections ont été réparties et mémorisées rend actuellement disponibles la une ou plusieurs sections du fichier pour le serveur de réseau Web (105), et
lors de la détermination (220) du fait qu'une quantité actuelle des sections qui sont mémorisées pour le fichier actuellement disponibles pour le serveur de réseau Web (105) est inférieure à la quantité de seuil, le module d'allocation de fichier (130) est en outre configuré pour répartir de nouveau (225) la section du fichier sur un deuxième sous-ensemble de la pluralité de dispositifs clients déterminés comme ayant un espace de mémorisation qui est alloué au serveur de réseau Web (105).

10. Serveur de réseau Web selon la revendication 9, dans lequel l'application d'allocation de ressources (120) est configurée pour fournir au serveur de réseau Web (105) des données d'allocation de ressources disponibles qui incluent une quantité des ressources allouées qui sont disponibles pour le serveur de réseau Web (105).

11. Serveur de réseau Web selon la revendication 9 ou 10, dans lequel la répartition des sections sur chaque dispositif du premier sous-ensemble de la pluralité de dispositifs clients par le module d'allocation de fichiers (130) est basée sur la quantité de ressources allouées qui sont rendues disponibles pour le serveur de réseau Web (105) par le premier sous-ensemble de la pluralité de dispositifs clients, dans lequel une quantité de ressources allouées qui sont rendues disponibles pour le serveur de réseau Web est de préférence définie par l'utilisateur final.

12. Serveur de réseau Web selon la revendication 9, 10 ou 11, où le serveur de réseau Web (105) inclut en outre un module d'assemblage de fichier (140) configuré pour :
regrouper (245) des sections qui ont été réparties sur au moins un du premier sous-ensemble et du deuxième sous-ensemble de la pluralité de dispositifs clients,
assembler (250) le fichier au niveau du serveur de réseau Web (105) à partir des sections regroupées, et
fournir (255) le fichier assemblé à un ou plusieurs dispositifs clients (110) qui sont reliés en communication au serveur de réseau Web (105).

13. Support de mémorisation lisible par un ordinateur non transitoire ayant un programme informatique incorporé sur celui-ci, le programme informatique étant exécutable par un dispositif de traitement dans un système informatique pour mettre en oeuvre un procédé de gestion de la répartition des fichiers sur une pluralité de dispositifs clients selon l'une quelconque des revendications 1 à 8.
